# DEMANDE DE BREVET EUROPEEN

(11) **EP 1 018 305 A2**
(43) Date de publication de la demande: **12.07.2000**
(21) Numéro de dépôt: 99403262.1
(22) Date de dépôt: 23.12.1999
(51) Int. Cl.: A23N 7/04, A47J 17/14

(54) **Appareil pour peler et optionnellement couper des légumes**

(30) Priorité: 08.01.1999 CA 2256795; 19.11.1999 CA 2289241
(71) Demandeur: Gingras, Michel, Lorraine, (Québec) J6Z 4P3 (CA)
(72) Inventeur: Gingras, Michel, Lorraine, (Québec) J6Z 4P3 (CA)
(74) Mandataire: Cabinet HERRBURGER

(57) **Abrégé**

Cet appareil pour peler des légumes de forme allongée, ovale ou ronde, tels que des concombres, carottes, navets ou pommes de terre comprend un support (10) définissant un trou dimensionné pour recevoir et laisser passer le légume à peler. Un nombre donné de couteaux (12) est monté sur le support (10) de façon à pouvoir coulisser radicalement vers le centre du trou. Ces couteaux (12) sont répartis de façon égale tout autour du support (10) et comprennent chacun une lame (14) s'étendant tangentiellement dans le trou de façon à peler une partie adjacente du légume introduit et pousser dans ce trou. Des ressorts sont prévus pour appliquer de façon permanente une force radiale sur tous les couteaux (12) en vue de les pousser vers le centre du trou. Cet appareil est très simple d'opération. Il permet de peler un légume d'un seul mouvement. Une base peut être prévue pour tenir le support (10) en position verticale sur une table.

## Description

### DOMAINE DE L'INVENTION

La présente invention concerne un outil de cuisine, et plus particulièrement un appareil pour peler des légumes de forme allongée, ovale ou ronde comme par exemple des concombres, des courges ou des navets, des carottes, des pommes de terre, ou autres.

L'invention concerne également un appareil du type ci-dessus mentionné, incluant en outre, de façon optionnelle, des moyens pour couper les légumes en même temps qu'ils sont pelés.

### BRÈVE DESCRIPTION DE L'ART ANTÉRIEUR

De façon traditionnelle, les couteaux à éplucher (ou peler) sont constitués d'un manche muni d'une lame ayant une ou plusieurs fentes longitudinales, cette lame étant généralement droite ou légèrement courbée. Pour peler un légume ou un fruit à l'aide d'un tel couteau, il est généralement nécessaire de retirer la pelure par bandes étroites, ce qui implique plusieurs mouvements de la part de l'utilisateur.

### RÉSUMÉ DE L'INVENTION

L'invention a pour objet un appareil pour peler un légume de forme allongée, ovale ou ronde, caractérisé en ce qu'il comprend:
un support définissant un trou pourvu d'un centre, ce trou étant dimensionné pour recevoir et laisser passer le légume à peler;
un nombre donné de couteaux montés sur le support de façon à pouvoir coulisser radialement vers le centre du trou, les couteaux étant répartis de façon égale tout autour du support et comprenant chacun une lame s'étendant tangentiellement dans le trou de façon à peler la partie adjacente du légume introduit et pousser dans ce trou; et
des ressorts pour appliquer de façon permanente une force radiale sur tous les couteaux en vue de les pousser vers le centre du trou.

L'appareil selon l'invention dont plusieurs modes préférentiels de réalisation vont être décrits ci-après, est très simple d'opération. Il permet de peler un légume en un seul mouvement ou avec une quantité minimale de mouvements. Ce même appareil permet aussi, de façon optionnelle, de couper le légume en train de se faire peler.

### BRÈVE DESCRIPTION DES FIGURES

La figure 1 est une vue frontale d'un appareil pour peler les légumes selon un premier mode de réalisation préféré de l'invention, comprenant un seul anneau supportant quatre couteaux.

La figure 2 est une vue frontale d'un appareil pour peler les légumes selon un second mode de réalisation préféré de l'invention, comprenant deux anneaux superposés supportant chacun quatre couteaux, cet appareil comprenant en outre un séparateur en quartiers.

La figure 3 est une vue en coupe frontale d'un appareil pour peler les légumes selon un troisième mode de réalisation préféré de l'invention, cet appareil étant pourvu de couteaux de structure différente de celles des couteaux illustrés sur les figures 1 et 2.

La figure 4 est une vue en perspective frontale d'un appareil pour peler les légumes selon un quatrième mode tout particulièrement préféré de réalisation de l'invention.

La figure 5 est une vue en perspective éclatée de l'appareil illustré sur la figure 4.

La figure 6 est une vue en perspective agrandie du trou central de l'appareil illustré sur les figures 4 et 5, cette vue montrant plus en détail la structure et le positionnement des lames des couteaux de l'appareil.

Les figures 7a et 7b sont des vues de côté de l'appareil illustré sur les figures 4 et 5, avec les coquilles respectivement en positions fermée et ouverte.

Les figures 8a et 8b sont des vues illustrant l'action de l'anneau permettant d'ajuster manuellement l'espace entre les lames des couteaux de l'appareil illustré sur les figures 5, 6 et 7 en fonction de la taille d'un légume à peler.

Dans un but de simplicité, les éléments structuraux similaires des divers modes de réalisation illustrés ont été identifiés par les mêmes numéros de référence dans la description qui suit.

### DESCRIPTION DE PLUSIEURS MODES DE RÉALISATION PRÉFÉRÉS DE L'INVENTION

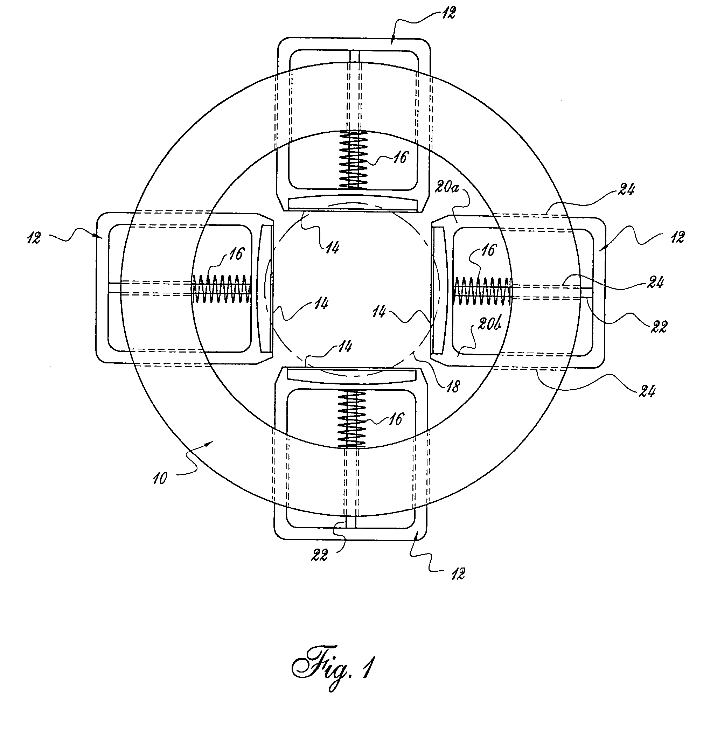

La figure 1 montre un appareil pour peler les légumes selon un premier mode de réalisation préféré de l'invention. Cet appareil comprend un support annulaire 10 définissant un trou sur la circonférence duquel sont disposés quatre couteaux 12, disposés symétriquement à 90° les uns des autres. Les couteaux 12 s'étendent dans le plan du support 10 et sont montés de façon à pouvoir coulisser radialement vers le centre du trou. Chaque couteau 12 comprend une lame 14 s'étendant dans le trou défini à l'intérieur du support 10. Tel qu'il est illustré, la lame 14 est disposée dans le plan du support et orientée perpendiculairement à un rayon de celui-ci. Chaque lame 14 peut être constituée d'une fine tranche de métal, d'un fil de métal tendu ou de deux ou plusieurs fils de métal disposés à angle pour former ensemble une lame se rapprochant d'une forme courbe. Chaque lame peut également être constituée d'une bande de métal de section transversale légèrement courbée, dont les extrémités sont des pivots et qui est pourvue d'une fente centrale allongée aux arêtes tranchantes. Ce type de lame est en fait celle que l'on retrouve sur les couteaux à éplucher conventionnels.

Un ressort 16 est disposé entre la lame 14 et la surface intérieure du support 10. Ce ressort 16 sert à appliquer une force radiale sur le couteau 12 pour le pousser sur le centre du trou défini par le support 10. En pratique, le ressort 16 pourrait être remplacé par tout autre moyen équivalent. Pour assurer un guidage approprié des couteaux 12 dans la direction radiale et un maintien du ressort 16, chaque couteau présente deux branches latérales 20a, 20b et un branche centrale 22 montées de façon à pouvoir coulisser dans des trous 24 prévus à cet effet dans le support 10. Le ressort 16 est enroulé autour de la branche centrale 22.

En usage, pour peler un légume 18 (illustré en pointillés), il suffit d'enfiler celui-ci dans le trou du support 10 et de l'y pousser. Les ressorts 16 amènent les lames 14 qui forment ensemble un carré à pénétrer sous la surface du légume 18, ce qui permet ainsi de peler simultanément quatre côtés de ce dernier.

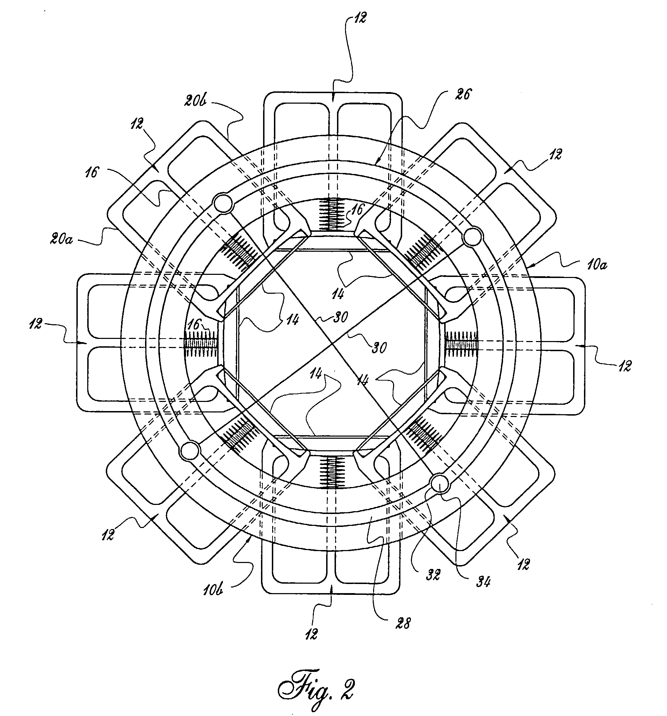

Selon un second mode de réalisation préféré de l'invention illustré sur la figure 2, l'appareil pour peler les légumes comprend deux supports 10a et 10b qui sont chacun de structure similaire à celle du support 10 illustré sur la figure 1. Ces deux supports 10a et 10b sont superposés. Tel qu'il est illustré, le support 10a est orienté à 45° par rapport au support 10b. De cette manière, les lames 14 des couteaux forment ensemble un octogone dans le trou et couvrent toute la circonférence du légume à peler, ce qui évite d'avoir à le passer deux fois dans l'appareil après l'avoir tourné à 45° comme c'est parfois requis avec l'appareil illustré sur la figure 1.

Optionnellement, l'appareil selon la présente invention peut être équipé d'un séparateur en quartiers 26, tel qu'illustré sur la figure 2. Ce séparateur 26 comprend un cadre 28 de forme et de diamètre semblables à ceux des supports 10a et 10b, et deux lames ou fils de métal qui sont entrecroisés et fixés sur le cadre 28 à leurs extrémités. Il est entendu que le nombre de lames ou fils de métal 30 utilisées et leur orientation pourraient différer de ce qui est illustré dans l'exemple montré sur la figure 2. Ainsi, une seule lame 30 pourrait être utilisée pour couper le légume en moitié, ou plusieurs lames pourraient être disposées autour du cadre 28 de manière à former un quadrillage. Tel qu'il est illustré, le cadre 28 comprend des fixations 32 permettant de fixer le séparateur 26 sur le support 10 ou 10a par le biais d'attaches 34 disposées sur une face de ce dernier.

On comprendra que pour faciliter son maniement, l'appareil pour peler les légumes illustré sur les figures 1 et 2 peut, si cela est souhaité, être pourvu de poignées latérales ou encore être fixé à l'intérieur d'un boîtier de forme cylindrique ou autre, qui serait lui-même fixable sur une table

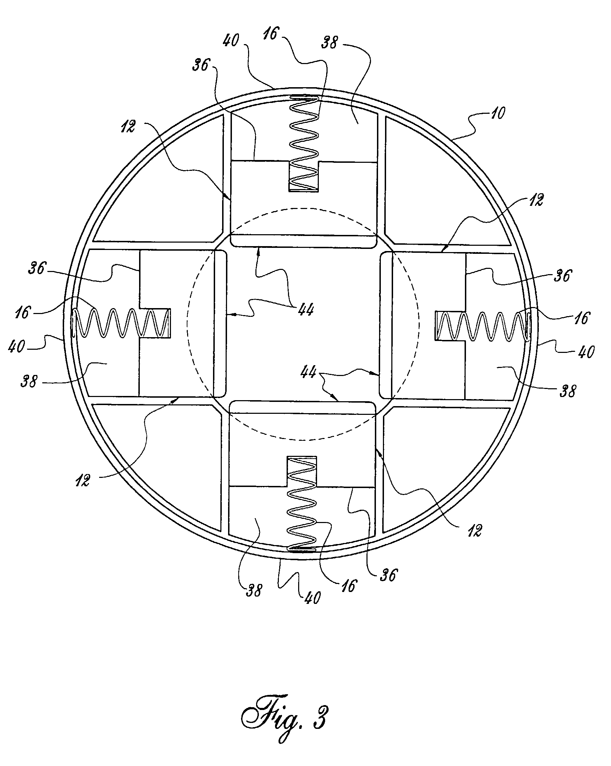

Un troisième mode de réalisation préféré de l'invention est illustré sur la figure 3. Dans ce mode de réalisation, l'appareil pour peler les légumes comprend des couteaux 12 de forme différente de ceux illustrés sur les figures 1 et 2. Chacun de ces couteaux 12 est muni d'une lame 44 fixée sur un bloc rectangulaire 36. Chacun de ces blocs 36 est insérée de façon à pouvoir glisser dans une cavité 38 s'étendant radialement dans l'anneau de support 10. Le ressort 16 s'étend entre le bloc 36 et le rebord externe de l'anneau 10.

Le support 10 pourrait bien sûr être de forme autre qu'annulaire. Ainsi, par exemple, il pourrait être octogonal.

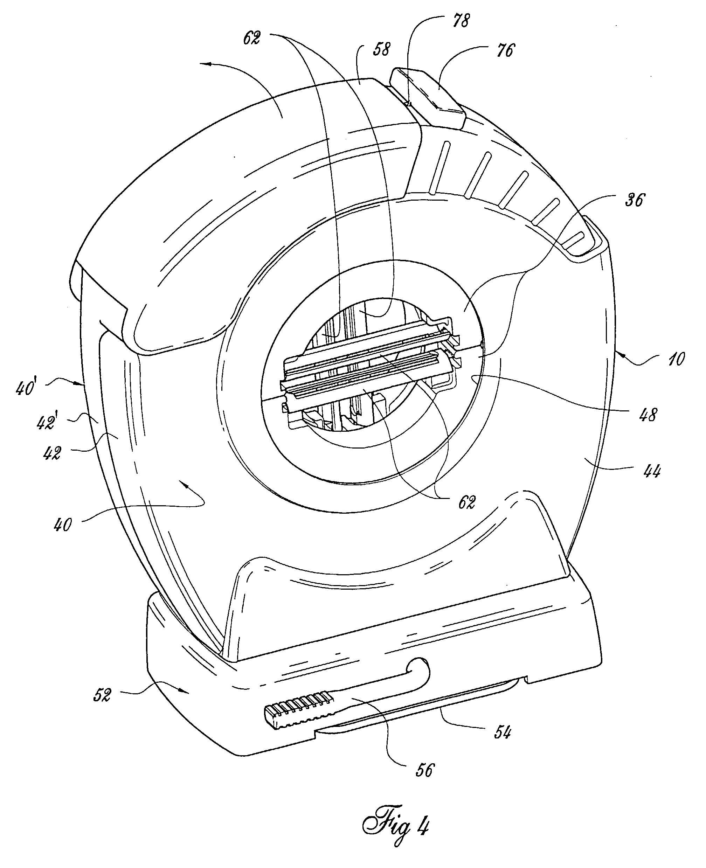

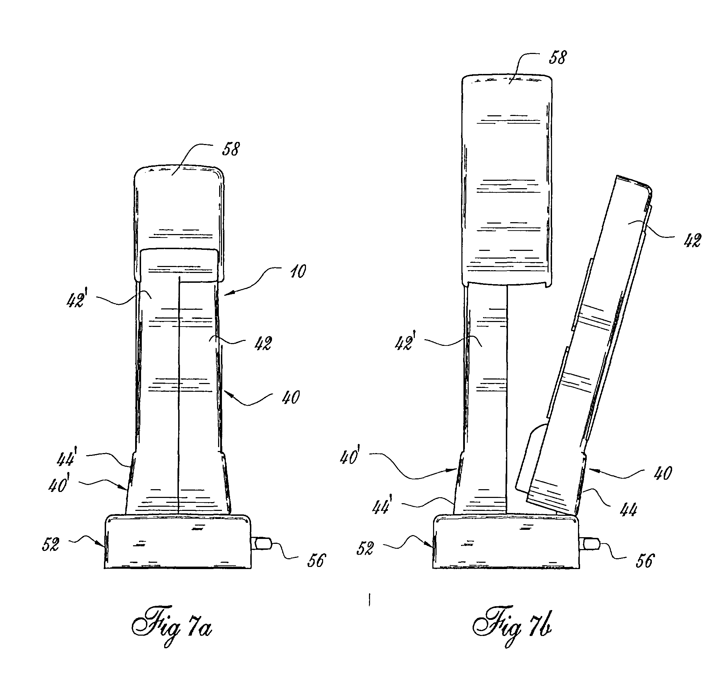

Un quatrième mode de réalisation tout particulièrement préféré de l'invention est illustré sur les figures 4 à 8.

Dans ce quatrième mode de réalisation, le support 10 comprend deux coquilles 40,40' présentant chacune un rebord 42, 42', une face externe 44, 44', une face interne 46' et une ouverture centrale 48, 48'. La face interne de chaque coquille 40, 40' est pourvue de deux parois 50, 50' disposées de façon symétrique de chaque côté de l'ouverture centrale 48, 48' de façon à définir ensemble un couloir rectiligne s'étendant transversalement à la coquille correspondante au-dessus de l'ouverture centrale de celle-ci.

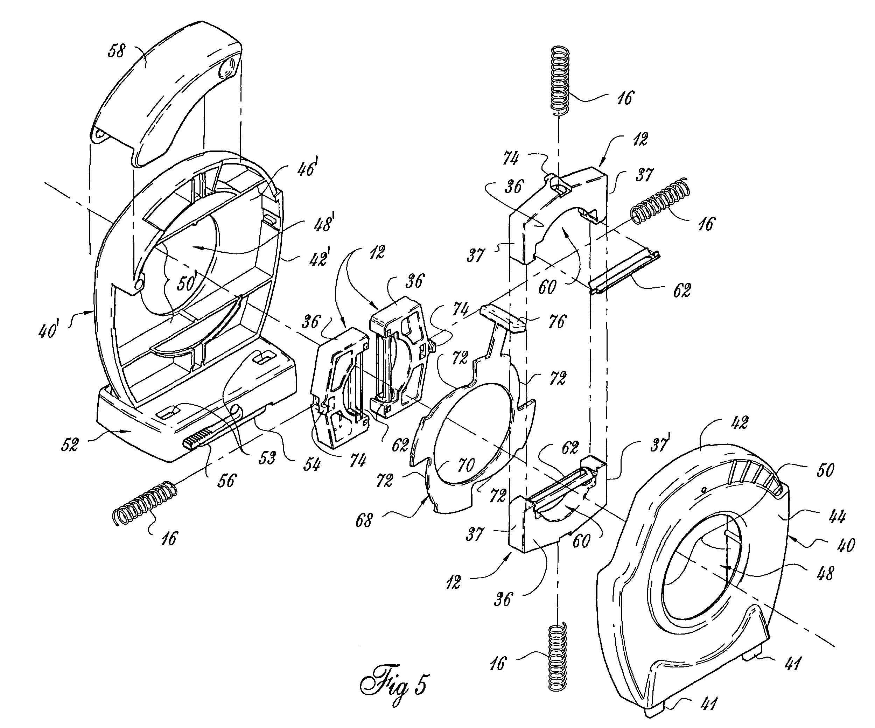

Une base 52 est avantageusement connectée au support 10 de façon à pouvoir être fixée de façon amovible à une surface plane de travail telle qu'une table ou un comptoir de cuisine pour tenir rigidement le support dans un plan vertical et ainsi faciliter la manipulation du légume à peler. Dans le mode de réalisation illustré, cette base 52 est fixée rigidement à la coquille 40' et comprend une surface inférieure pourvue d'une ventouse 54 actionnable à l'aide d'un levier 56 pour assurer la fixation voulue à même la surface plane. Ce type de fixation est bien connu dans le domaine des ustensiles de cuisine et n'a pas besoin d'être décrit plus en détail. La base 52 sert également de support à l'autre coquille 40 qui est montée à l'aide de deux tiges de retenue 41 dans des trous 53 prévus dans la base (voir la figure 5).

Le support 10 comprend également des moyens pour fixer de façon détachable les deux coquilles 40, 40' l'une à l'autre de façon à ce que leurs faces internes soient en vis-à-vis, leurs ouvertures centrales 48, 48' soient alignées pour former ensemble le trou du support, et leurs couloirs rectilignes définis par les parois 50, 50' soient orientés à 90° l'un par rapport à l'autre tel qu'on peut le voir sur la figure 5. Dans le mode de réalisation illustré, les moyens en question incluent d'une part, la base 52 et d'autre part, une pièce en U 58 montée de façon pivotante sur la coquille 40' à l'opposé de la base 52. Lorsqu'elle est pivotée en position rabattue (voir la figure 4) la pièce en U 58, s'emboîte sur les coquilles 40, 40' et maintient celles-ci l'une contre l'autre.

Les couteaux 12 de l'appareil illustré sur les figures 4 à 8 comprennent chacun un bloc rigide 36 dimensionné pour s'engager dans un des couloirs définis par les parois 50, 50' et coulisser dans celui-ci. Chaque bloc 36 est pourvu de deux côtés opposés 37, 37' rectilignes qui sont en contact direct avec les parois 50, 50' du couloir. Chaque bloc est également pourvu d'un retrait arrondi 60 du côté de l'ouverture centrale 48, 48'.

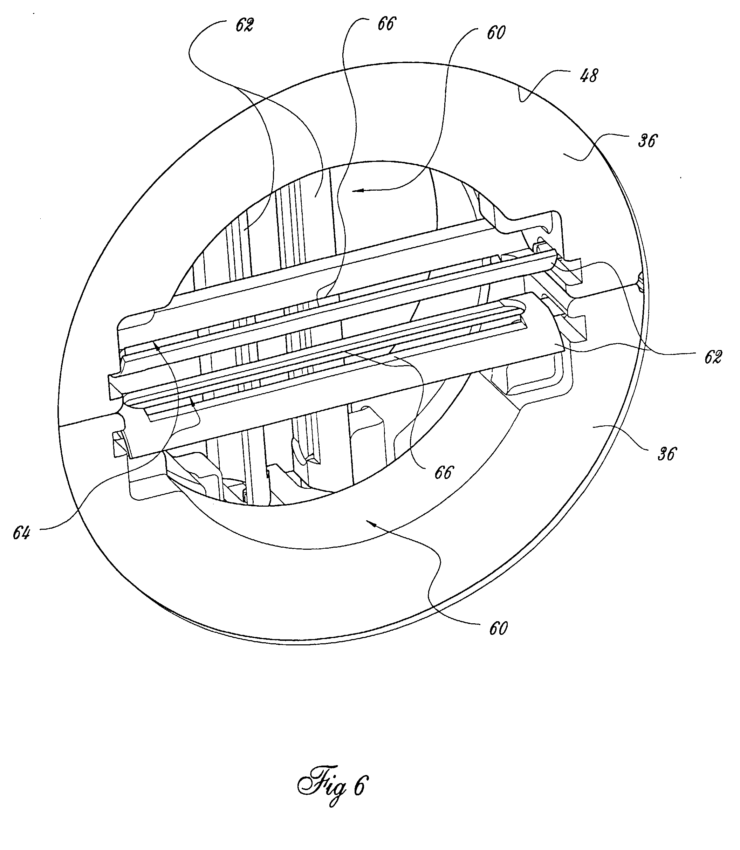

Les couteaux 12 comprennent également chacun une lame 62 montée de façon pivotante en travers du retrait 60 du bloc correspondant. Tel qu'il est mieux illustré sur la figure 6, chaque lame 62 consiste en une mince bande de métal ayant une section transversale légèrement courbée, cette bande étant pourvue d'une fente centrale allongée 64 ayant des arêtes opposées 66 tranchantes. Tel que précédemment mentionné, ce type de lame 60 est celle que l'on retrouve sur les couteaux à éplucher conventionnels.

Des ressorts 16 sont disposés dans les couloirs en arrière des blocs 36. Ces ressorts prennent appui sur les rebords 42, 42' des coquilles 40, 40' pour pouvoir ainsi pousser les blocs 36 et les lames 62 vers les ouvertures centrales correspondantes 48, 48' pour obtenir l'effet de coupe voulue.

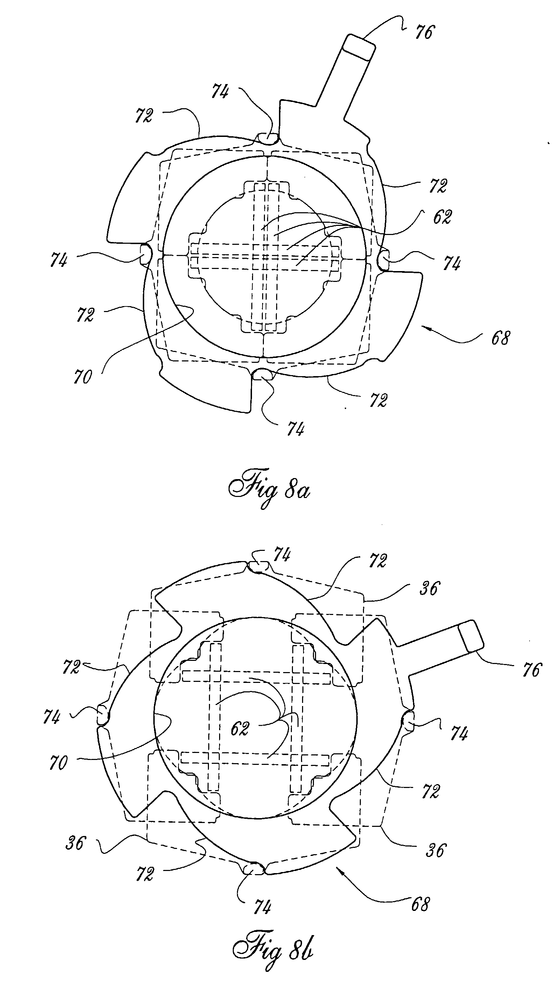

Avantageusement, l'appareil selon l'invention tel qu'il est illustré sur les figures 4 à 8 peut comprendre en outre des moyens pour ajuster à volonté le positionnement des lames 62 au sein du trou du support 10 en fonction de la taille du légume à peler. Tel qu'illustré sur les figures 5 et 8, ces moyens d'ajustement comprennent un anneau plat 68 monté entre les deux coquilles 40, 40'. Cet anneau 68 a une arête interne 70 définissent une ouverture de la taille du trou et une arête externe pourvue de quatre encavures espacées à 90° et inclinées dans un même sens. Ces encavures 72 jouent le rôle de cames sur lesquelles prennent appui des doigts 74 projetant des blocs 36 des couteaux 12. L'anneau 68 comprend également une manette d'opération 76 s'étendant radicalement depuis son arête externe. Cette manette 76 passe à l'extérieur du support 10 dans une fente 78 prévue à cet effet entre les rebords 42, 42' des deux coquilles 40, 40' de façon à permettre à un utilisateur de l'attraper et l'actionner. En procédant ainsi, l'utilisateur peut faire tourner l'anneau 68 et de là forcer les couteaux à s'éloigner du centre du trou ou leur permettre de s'en rapprocher en vue d'ajuster l'espace entre les lames en fonction de la taille du légume à peler (voir les figures 8a et 8b).

De nombreux changements ou modifications pourraient bien entendu être apportés aux appareils ci-dessus décrits et illustrés sans sortir de la portée ou l'esprit de l'invention.

## Revendications

1. Un appareil pour peler un légume de forme allongée, ovale ou ronde, caractérisé en ce qu'il comprend:
un support définissant un trou pourvu d'un centre, ce trou dimensionné pour recevoir et laisser passer le légume à peler;
un nombre donné de couteaux montés sur le support de façon à pouvoir coulisser radialement vers le centre du trou, ces couteaux étant répartis de façon égale tout autour du support et comprenant chacun une lame s'étendant tangentiellement dans le trou de façon à peler une partie adjacente du légume introduit et pousser dans ce trou; et
des ressorts pour appliquer de façon permanente une force radiale sur tous les couteaux en vue de les pousser vers le centre du trou.

2. Un appareil selon la revendication 1, caractérisé en ce que le nombre donnée de couteaux est égal à quatre et ces quatre couteaux sont répartis de façon à ce que leurs lames forment ensemble un carré dans le trou.

3. Un appareil selon la revendication 1, caractérisé en ce que le nombre donné de couteaux est égal à huit et les huit couteaux sont répartis de façon à ce que leurs lames forment ensemble un octogone dans le trou.

4. Un appareil selon la revendication 1, 2 ou 3, caractérisé en ce qu'il comprend en outre:
un séparateur en quartiers comprenant un cadre fixable à même une face du support et au moins une lame ou un fil de découpe fixé au cadre de façon à s'étendre en travers du trou lorsque le cadre est fixé au support, pour ainsi pouvoir couper longitudinalement le légume lorsque celui-ci est inséré et passé dans le trou.

5. Un appareil selon la revendication 2, caractérisé en que:
- le support comprend deux coquilles présentant chacune un rebord, une face externe, une face interne et une ouverture centrale, ladite face interne de chaque coquille étant pourvue de deux parois disposées de façon symétrique de chaque côté de l'ouverture centrale de façon à définir ensemble un couloir rectiligne s'étendant transversalement à la coquille correspondante et au-dessus de l'ouverture centrale de celle-ci;
- le support comprend également des moyens pour fixer de façon détachable les deux coquilles l'une à l'autre de façon à ce que leurs faces internes soient en vis-à-vis, leurs ouvertures centrales soient alignées pour former ensemble le trou du support, et leurs couloirs rectilignes soient orientés à 90° l'un par rapport à l'autre;
- les couteaux comprennent chacun un bloc rigide dimensionné pour s'engager dans un des couloirs et coulisser dans celui-ci, ce bloc étant pourvu de deux côtés opposés rectilignes qui sont en contact direct avec les parois du couloir, le bloc étant également pourvu d'un retrait du côté de l'ouverture centrale;
- les couteaux comprennent également chacun une lame montée de façon pivotante en travers du retrait du bloc correspondant, la lame consistant en une mince bande de métal ayant une section transversale légèrement courbée, cette bande étant pourvue d'une fente centrale allongée avec des arêtes tranchantes; et
- les ressorts sont disposés dans les couloirs en arrière des blocs et prennent appui sur les rebords des coquilles pour pouvoir ainsi pousser lesdits blocs vers les ouvertures centrales correspondantes.

6. Un appareil selon la revendication 5, caractérisé en ce qu'il comprend en outre:
une base connectée au support et fixée de façon amovible à une surface plane de travail pour tenir rigidement ledit support dans un plan vertical et ainsi faciliter la manipulation du légume à peler.

7. Un appareil selon la revendication 6, caractérisé en ce que la base est fixée à au moins une des coquilles et comprend une surface inférieure pourvue d'une ventouse actionnable à l'aide d'un levier pour assurer la fixation voulue à même la surface plane.

8. Un appareil selon la revendication 6 ou 7, caractérisé en ce que les moyens pour fixer les coquilles ensemble incluent d'une part, la base et d'autre part, une pièce en U montée de façon pivotante sur une des coquilles à l'opposé de la base, la pièce en U lorsque pivotée en position rabattue s'emboîtant sur les coquilles et maintenant celles-ci l'une contre l'autre.

9. Un appareil selon la revendication 5, 6, 7 ou 8, caractérisé en ce qu'il comprend en outre:
- un anneau plat monté entre les deux coquilles, cet anneau ayant une arête interne définissent une ouverture de la taille du trou et une arête externe pourvue de quatre encavures espacées à 90° et inclinées dans un même sens, ces encavures jouant le rôle de cames sur lesquelles prennent appui des doigts projetant des blocs des couteaux, ledit anneau comprenant également une manette d'opération s'étendant radialement depuis son arête externe, ladite manette passant à l'extérieur du support dans une fente prévue à cet effet entre les rebords deux coquilles de facon à permettre à un utilisateur de l'attraper et l'actionner pour faire tourner l'anneau et de là forcer les couteaux à s'éloigner du centre du trou ou leur permettre de s'en rapprocher en vue d'ajuster l'espace entre les lames en fonction de la taille du légume à peler.
